# EUROPEAN PATENT APPLICATION

(11) **EP 3 326 484 A1**
(43) Date of publication of application: **30.05.2018**
(21) Application number: 17166677.9
(22) Date of filing: 13.04.2017
(51) Int. Cl.: A44C 5/10

(54) **CONNECTION STRUCTURE**

(30) Priority: 25.11.2016 CN 201611050418
(71) Applicant: Ouyang, Bo, Guangzhou 510000 (CN)
(72) Inventor: Ouyang, Bo, Guangzhou 510000 (CN)
(74) Representative: Beck Greener

(57) **Abstract**

The invention provides a connection structure including: a first subassembly (1) and a second subassembly (2) each including a first side edge. A first tubular body (3) and a second tubular body (4) are fixedly connected to the first side edge of the first subassembly, and a third tubular body (5) is fixedly connected to the first side edge of the second subassembly; a gap is disposed between the first tubular body and the second tubular body and is configured to accommodate the third tubular body; an inner wall of the first tubular body and an inner wall of the second tubular body both comprise female threads, and an inner wall of the third tubular body is smooth; fixing means with an external threaded portion are disposed in the first tubular body and the second tubular body and match the female threads of the first tubular body and the second tubular body.

## Description

The present invention relates to field of component connectors, and more particularly to a connection structure suitable for the connection of jewellery components.

With the continuous development of society and the progress of science and technology with each passing day, jewellery, a kind of luxury made of high-grade valuable gem and jade and precious metals, has gradually become fashion accessories and even part of daily necessities of some people under the influence of modern popular culture.

The connection of jewellery mainly refers to the organization mode of the components and modeling elements in the design process of jewellery, including drilling, bonding, aligning, welding, embedding, riveting, folding, coiling, or a combination thereof. Just like other products, the structure of jewellery plays a very important role and has a great significance to its physical appearance, function and value.

In the prior art, the most common connection between metals of jewellery is to employ a welding structure, specifically, a third metal is molten to connect two other metals, and the melting point of the third metal (welding flux, welding agent) is smaller than that of other metals. The connection mode is secure, mature and easy to practice.

However, the defect lies in that, after welding, the welding junction requires further processing, which may cause the deformation of jewellery or the generation of impurities on the welding spot.

The metal parts can also be physically connected, such as riveting, screwing, locking, or a combination thereof. The physical connection mode is reliable and highly efficient. However, the physical connection mode often requires professionals to operate, and the misoperation will adversely affect the physical appearance of jewellery. In addition, in actual use, the manufacturing efficiency of jewellery using the physical connection is rather low on the whole.

The present disclosure of the invention provides a connection structure.

According to a first aspect of the present invention, there is provided a connection structure, comprising: a first subassembly and a second subassembly each comprising a first side edge; a first tubular body and a second tubular body are fixedly connected to the first side edge of the first subassembly, and a third tubular body is fixedly connected to the first side edge of the second subassembly; a gap is disposed between the first tubular body and the second tubular body and is configured to accommodate the third tubular body;
an inner wall of the first tubular body and an inner wall of the second tubular body both comprise female threads, and an inner wall of the third tubular body is smooth;
fixing means with an external threaded portion are disposed in the first tubular body and the second tubular body and match the female threads of the first tubular body and the second tubular body.

In one embodiment, the first subassembly comprises a second side edge opposite to the first side edge, and the second side edge is provided with the third tubular body; the second subassembly comprises a second side edge opposite to the first side edge, and the second side edge is provided with the first tubular body and the second tubular body.

In one embodiment, the fixing means with an external threaded portion comprise a head and a screw comprising male threads, and a top of the head of the screw comprises a slotted opening or a cross-shaped opening.

In one embodiment, the fixing means with an external threaded portion employ a flat head bolt, and one end of the first tubular body and one end of the second tubular body close to a flat head of the flat head bolt both comprise a counterbore for accommodating the flat head of the flat head bolt.

In one embodiment, an inner diameter of the third tubular body is larger than an outer diameter of the fixing means with an external threaded portion.

In one embodiment, the first tubular body, the second tubular body, and the third tubular body have the same outer diameter.

In one embodiment, the first and second subassemblies comprise different jewellery components.

In one embodiment, a plurality of first subassemblies and a plurality of second subassemblies are provided.

According to a second aspect of the present invention, there is provided an item of jewellery comprising a first subassembly, a second subassembly and a connection structure, each subassembly comprising a first side edge, wherein a first tubular body and a second tubular body are fixedly connected to the first side edge of the first subassembly, and a third tubular body is fixedly connected to the first side edge of the second subassembly; a gap is disposed between the first tubular body and the second tubular body and is configured to accommodate the third tubular body; an inner wall of the first tubular body and an inner wall of the second tubular body both comprise female threads, and an inner wall of the third tubular body is smooth; fixing means with an external threaded portion are disposed in the first tubular body and the second tubular body and match the female threads of the first tubular body and the second tubular body.

In one embodiment, the item of jewellery comprises a plurality of first subassemblies and a plurality of second subassemblies.

According to one embodiment of the invention, provided is a connection structure, which comprises a first subassembly and a second subassembly each comprising a first side edge; wherein a first tubular body and a second tubular body are fixedly connected to the first side edge of the first subassembly, and a third tubular body is fixedly connected to the first side edge of the second subassembly; a gap is disposed between the first tubular body and the second tubular body and is configured to accommodate the third tubular body; an inner wall of the first tubular body and an inner wall of the second tubular body both comprise female threads, and an inner wall of the third tubular body is smooth; bolts are disposed in the first tubular body and the second tubular body and match the female threads of the first tubular body and the second tubular body.

The connection structure of the invention has a simple and rational design, low production cost, and is easy to assemble and disassemble. The assembly and disassembly of the connection structure can be achieved using conventional tools, without the involvement of operations from professionals, and the connection is highly efficient.

The connection structure is particularly practicable for manufacturing different components of jewellery. Through the connection structure, a user can freely combine and match different kinds of jewellery components with each other to form different styles to conform to his or her preferences; in addition, the components of different jewelries can be randomly exchanged as needed, so the connection structure can be used in a broad range of scope.

It should be understandable that the implementation of any of the connection structures of the present invention does not necessarily require the simultaneous achievement of all of the above advantages.

An embodiment of the invention will now be described with reference to the accompanying figure in which:

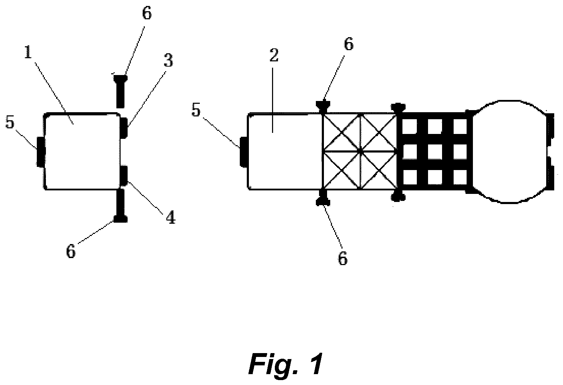

FIG.**1** is a schematic diagram of a connection structure in accordance with one embodiment of the invention.

Legends: 1. First subassembly; 2. Second subassembly; 3. First tubular body; 4. Second tubular body; 5. Third tubular body; 6. Bolt/screw.

To make the objects, technical solutions and advantages of the present invention more clear, hereinafter the present invention will be described in more detail with reference to the embodiments. It should be understood that the specific embodiments described herein are merely for the purpose of explaining the invention and are not intended to be limiting of the invention.

As shown in FIG. 1, one embodiment of the invention provides a connection structure, which comprises: a first subassembly 1 and a second subassembly 2 each comprising a first side edge. A first tubular body 3 and a second tubular body 4 are fixedly connected to the first side edge of the first subassembly 1, and a third tubular body 5 is fixedly connected to the first side edge of the second subassembly 2; a gap is disposed between the first tubular body 3 and the second tubular body 4 and is configured to accommodate the third tubular body 5;
an inner wall of the first tubular body 3 and an inner wall of the second tubular body 4 both comprise female threads, and an inner wall of the third tubular body 5 is smooth; and

fixing means with an external threaded portion, in the form of screws/bolts 6 are disposed in the first tubular body 3 and the second tubular body 4 and match the female threads of the first tubular body and the second tubular body.

In use of the connection structure, first of all, the third tubular body is disposed in the gap between the first tubular body and the second tubular body, and then the bolts in the first tubular body and in the second tubular body are screwed up, so that the first subassembly and the second subassembly are connected to form an integrated structure. When it is required to disassemble the integrated structure, just to unscrew the screws/bolts at two ends of the integrated structure. The assembly and disassembly are easy and simple to handle, and the connection is secure.

In actual use, to achieve the connection of a plurality of subassemblies, the second side edge of the first subassembly opposite to the first side edge thereof is provided with the third tubular body, and the second side edge of the second subassembly opposite to the first side edge thereof is provided with the first tubular body and the second tubular body.

A plurality of first subassemblies and second subassemblies can be manufactured following the teaching of the present disclosure and be connected following the connection method disclosed in the embodiment. To facilitate the user's operation, the bolts/screws are provided with a head and a screwthread comprising male threads, and the top of the head of the screw comprises a slotted opening or a cross-shaped opening. The connection structure can be assembled or disassembled through screwing up or unscrewing the screws using a screwdriver.

To improve the physical appearance of the connection structure, the bolts employ a flat head bolt/screw, and one end of the first tubular body and one end of the second tubular body close to the flat head of the flat head bolt/screw both comprise a counterbore for accommodating the flat head of the flat head bolt/screw. Through employing the flat head bolt/screw and designing the counterbore, after the bolts/screws are screwed up, the flat head is embedded in the counterbore, thereby greatly improving the physical appearance of the connection structure. As an improvement, the outer diameters of the first, second and third tubular bodies are the same. To ensure the first subassembly can rotate freely relative to the second subassembly after assembly, the inner diameter of the third tubular body is designed to be larger than the outer diameter of the bolts/screws.

The connection structure of the invention has a simple and rational design, low production cost, and is easy to assemble and disassemble. The assembly and disassembly of the connection structure can be achieved using conventional tools, without the involvement of operations from professionals, and the connection is highly efficient. The connection structure is particularly practicable for manufacturing different components of jewellery. Through the connection structure, a user can freely combine and match different kinds of jewellery components with each other to form different styles to conform to his or her preferences; in addition, the components of different jewelries can be randomly exchanged as needed, so the connection structure can be used in a broad range of scope.

It should be noted that, the terms such as "the first" and "the second" in certain embodiments of the invention are only used to differentiate an entity or operation from another entity or operation, and there is not a must or hint that the entities or operations have substantive relationship or sequential order. In addition, the terms "comprise", "comprising" or a variant thereof mean containing but do not exclude other elements, so that processes, methods, articles or equipment including a series of elements not only include these elements, but also include other elements not explicitly listed, or also includes inherent elements of the processes, methods, articles or equipment. Unless otherwise stated, the element limited by the statement "includes one" may include other same or similar elements in the processes, methods, articles, or equipment.

Embodiments of the present invention have been described with particular reference to the examples illustrated. While specific examples are shown in the drawings and are herein described in detail, it should be understood, however, that the drawings and detailed description are not intended to limit the invention to the particular form disclosed. It will be appreciated that variations and modifications may be made to the examples described within the scope of the present invention.

## Claims

1. A connection structure, comprising: a first subassembly and a second subassembly each comprising a first side edge;
wherein
a first tubular body and a second tubular body are fixedly connected to the first side edge of the first subassembly, and a third tubular body is fixedly connected to the first side edge of the second subassembly; a gap is disposed between the first tubular body and the second tubular body and is configured to accommodate the third tubular body;
an inner wall of the first tubular body and an inner wall of the second tubular body both comprise female threads, and an inner wall of the third tubular body is smooth;
fixing means with an external threaded portion are disposed in the first tubular body and the second tubular body and match the female threads of the first tubular body and the second tubular body.

2. The connection structure of claim 1, wherein the first subassembly comprises a second side edge opposite to the first side edge, and the second side edge is provided with the third tubular body; the second subassembly comprises a second side edge opposite to the first side edge, and the second side edge is provided with the first tubular body and the second tubular body.

3. The connection structure of claim 1 or 2, wherein the fixing means comprise a screw having a head and a screw portion comprising male threads, and a top of the head of the screw comprises a slotted opening or a cross-shaped opening.

4. The connection structure of any one of the preceding claims, wherein the fixing means employ a flat head bolt, and one end of the first tubular body and one end of the second tubular body close to a flat head of the flat head bolt both comprise a counterbore for accommodating the flat head of the flat head bolt.

5. The connection structure of any one of the preceding claims, wherein an inner diameter of the third tubular body is larger than an outer diameter of the fixing means.

6. The connection structure of any one of the preceding claims , wherein the first tubular body, the second tubular body, and the third tubular body have the same outer diameter.

7. The connection structure of any one of the preceding claims, wherein the first subassembly and the second subassembly comprise jewellery components.

8. The connection structure of claim 7, wherein the first and second subassemblies comprise different jewellery components.

9. The connection structure of any one of the preceding claims, wherein a plurality of first subassemblies and a plurality of second subassemblies are provided.

10. An item of jewellery comprising a first subassembly, a second subassembly and a connection structure, each subassembly comprising a first side edge;
wherein
a first tubular body and a second tubular body are fixedly connected to the first side edge of the first subassembly, and a third tubular body is fixedly connected to the first side edge of the second subassembly; a gap is disposed between the first tubular body and the second tubular body and is configured to accommodate the third tubular body;
an inner wall of the first tubular body and an inner wall of the second tubular body both comprise female threads, and an inner wall of the third tubular body is smooth;
fixing means with an external threaded portion are disposed in the first tubular body and the second tubular body and match the female threads of the first tubular body and the second tubular body.

11. The item of jewellery of claim 10, further comprising a plurality of first subassemblies and a plurality of second subassemblies.
